(19) Europäisches Patentamt
European Patent Office
Office européen des brevets

(11) EP 2 950 670 B1

(12) EUROPEAN PATENT SPECIFICATION

(45) Date of publication and mention of the grant of the patent:
**13.11.2019 Bulletin 2019/46**

(21) Application number: **14746322.8**

(22) Date of filing: **30.01.2014**

(51) Int Cl.:
***A23L 2/44** (2006.01)* ***A23L 3/015** (2006.01)*
***A23L 3/3463** (2006.01)* ***A23L 3/3508** (2006.01)*
***A23L 3/3526** (2006.01)* ***A23L 3/3562** (2006.01)*
***A23L 2/52** (2006.01)* ***A23L 2/54** (2006.01)*

(86) International application number:
**PCT/US2014/013722**

(87) International publication number:
**WO 2014/120857 (07.08.2014 Gazette 2014/32)**

# (54) BEVERAGE PRESERVATIVE SYSTEM BASED ON PIMARICIN AND HEADSPACE GAS

GETRÄNKEKONSERVIERUNGSSYSTEM AUF BASIS VON PIMARICIN UND EINEM DAMPFRAUM-GAS

SYSTÈME CONSERVATEUR POUR BOISSON À BASE DE PIMARICINE ET D'UN GAZ DE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2013 US 201361758988 P**

(43) Date of publication of application:
**09.12.2015 Bulletin 2015/50**

(73) Proprietor: **Pepsico, Inc.**
**Purchase, NY 10577 (US)**

(72) Inventors:
- **SMITH, Richard T.**
  **Ridgefield, Connecticut 06877 (US)**
- **SANNITO, Dan**
  **Norwalk, Connecticut 06851 (US)**

(74) Representative: **Maiwald Patent- und Rechtsanwaltsgesellschaft mbH**
**Elisenhof**
**Elisenstraße 3**
**80335 München (DE)**

(56) References cited:
**US-A- 5 773 062** **US-A1- 2010 310 722**
**US-A1- 2010 323 065** **US-A1- 2012 196 003**

- **KOONTZ JOHN L ET AL: "Stability of natamycin and its cyclodextrin inclusion complexes in aqueous solution", JOURNAL OF AGRICULTURAL AND FOOD CHEMISTRY, AMERICAN CHEMICAL SOCIETY, US, vol. 51, no. 24, 19 November 2003 (2003-11-19), pages 7111-7114, XP002464389, ISSN: 0021-8561, DOI: 10.1021/JF030333Q**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

This invention relates to beverage preservative systems and beverage products comprising the preservative systems. In particular, this invention relates to beverage preservative systems having formulations suitable to meet consumer demand for healthy and environmentally friendly ingredients.

### BACKGROUND

Many food and beverage products include chemical preservatives to extend the shelf-life of the product by inhibiting the growth of spoilage microorganisms (e.g., mold, yeast, bacteria). However, some preservatives currently in use have been characterized as either a detriment to one's health, a threat to the environment, or as insufficiently stable. Therefore, there is market demand for food and beverage products which do not include these detrimental preservatives, and yet still possess extended shelf-life.

For example, benzoic acid and its salts are commonly used in beverage products as preservatives. However, in some beverage formulations that possess vitamin C and a relatively high pH, a small fraction of benzoic acid and its salts is prone to conversion into benzene (ppb quantities). Heat and certain wavelengths of light increase the rate of this reaction, so extra care need be taken in the production and storage of beverage such products when both benzoate and ascorbic acid are ingredients. Intake of benzene in drinking water is also a public health concern.

Ethylenediamine tetraacetic acid (EDTA) and its salts is also a common beverage product preservative. EDTA sequesters metal ions and can impact their participation in any number of chemical reactions. EDTA has surfaced as environmental concerns predominantly because of its persistence and strong metal chelating properties.

Polyphosphates are another type of sequestrant employed as a beverage product preservative. However, polyphosphates are not stable in aqueous solution and degrade rapidly at ambient temperature. Degradation of polyphosphates results in unsatisfactory sensory issues in the beverage product, such as change in acidity. Also, the shelf-life of the beverage product can be compromised as the concentration of polyphosphate deteriorates.

New preservative systems for use in beverages are needed as replacements for preservative systems that have detrimental health and/or environmental effects or that lack sufficient stability. Such systems should provide improved sensory impact. US publication 2010/0323065 provides a beverage preservative system containing a pimaricin-cyclodextrin complex for use in beverages.

It is an object of the present application to improve upon the stability and sensory characteristics of pimaricin and pimaricin-cyclodextrin complexes, particularly in acidic beverages. It is a further object to improve the effectiveness of pimaricin in low concentrations in order to provide affordable consumer options.

### SUMMARY

An aspect of the invention relates to a beverage product in a sealed container according to claim 1.

A method of making a beverage in a sealed container according to the invention is described in claim 8.

### BRIEF DESCRIPTION OF THE DRAWINGS

FIG. 1 depicts the growth of spoilage organisms at low $O_2$ concentration.

FIG. 2 depicts the degradation kinetics of pimaricin in mock beverages in absence of β-cyclodextrin.

FIG. 3 depicts the loss of pimaricin over time as a function of $O_2$ content (pbb) and presence or absence of complex (modeled) at STP.

FIG. 4 depicts the degradation kinetic of pimaricin and onset of spoilage.

FIG. 5 depicts the degradation of pimaricin in the presence of an equal amount of β-cyclodextrin when beverage is subject to pressure from 3.7 volume of $CO_2$.

FIG. 6 depicts the given presence of pressure from $CO_2$, very low concentration of pimaricin (0.8 ppm) in presence of equal amount of cyclodextrin provides protection from spoilage by *Zygosaccharomyces* and *Brettanomyces* spoilage yeast.

### DETAILED DESCRIPTION

The present invention provides for the stabilization of the food grade antifungal agent, pimaricin, against the degradative effect of oxygen in a manner that does not compromise the activity of pimaricin toward fungi that are typically the cause of spoilage in high acid beverages. The invention does not necessitate the exclusion of oxygen from beverages. In fact, the oxygen content of carbonated beverages is typically quite high, about half as much oxygen as found in a still beverage. Surprisingly, the quantity of pimaricin required to preserve product is at least one order of magnitude less than is reported in the literature or disclosed in various patents.

The present invention resides in an interaction between gases other than oxygen, the pressure exerted by the gases other than oxygen, and the complex of cyclodextrin with pimaricin. Though not wishing to be bound by theory, the invention may reflect a pressure induced positioning of pimaricin within the core of the cyclodextrin molecule such that generally reactive chemical bonds

between atoms in pimaricin are made inaccessible to oxygen. As is demonstrated in various studies, the invention is not dependent on a reduction of oxygen concentrations in the beverage. In fact, evidence in hand indicates that the general stability of pimaricin in aqueous suspension as a complex with cyclodextrin is only slightly improved over pimaricin alone from the perspective of a 16 week shelf life. Although not dependent on the reduction or elimination of oxygen from liquid, the present invention would still benefit from any reduction of oxygen content in the beverage that can be achieved.

The present invention can be understood in the context of the physical chemistry which dictates the interactions of a liquid and gases in contact with the liquid. Water or any aqueous phase (>95% water) beverage that shares an interface with the atmosphere will contain a quantity of the gases that are present in the atmosphere. Air is composed of 78.08% Nitrogen ($N_2$) comprises 20.95% % Oxygen ($O_2$) 0.93% Argon and lesser amounts of $CO_2$, Helium, Krypton, and Hydrogen. $N_2$ and $O_2$ combine for 99.04% of the total gas found in air. The amount of each type of gas that will enter solution is readily determined through the use of Henry's Law and knowledge of a value known as the Henry's constant ($K_H$). Henry's law states that at a constant temperature, the amount of gas dissolved in a given type and volume of liquid is directly proportional to the partial pressure of that gas in equilibrium with the liquid. This relationship can be expressed mathematically as follows.

$$[X_{(aq)}] = K_H * p_X$$

The equation translates to mean the concentration of gas component X in the aqueous phase is equal to product of Henry's constant for the gas and the partial pressure of the gas in equilibrium with the liquid. The value, $p_x$, is the pressure exerted by the molecule in question as a gas. At one atmosphere pressure, the partial pressure of $N_2$ is 0.78 and for $O_2$ it is 0.2095. Henry's constants are known and are readily available from various references. The form in which the constant can be expressed varies. When expressed as [mole $_{gas}$/L*atm ) the value of $K_H$ for $N_2$ is 6.48 x $10^{-4}$ and for $O_2$ 1.28 x $10^{-3}$ in water at 25°C. The values will vary slightly as a function of pH, presence of solute, and temperature. If present at identical pressures, the values of $K_H$ indicate that Nitrogen will be less soluble in water on a mole per mole basis. The difference in molecular weights for $O_2$ and $N_2$ (31.9988 versus 28.0134 respectively) serves to accentuate the difference when the value of mole per liter is converted to gram per liter. The concentration of gases in liquid can be expressed in different ways. Herein, the use of part per billion (ppb) is to be employed (microgram $1^{-1}$, mcg $1^{-1}$, ppb).

A small amount of water vapor will occupy the gas phase that is in contact with liquid water. If the gas phase is air at 25°C, the partial pressures for $N_2$ and $O_2$ are respectively 0.7566 and 0.203 atm. Employing appropriate values for Henry's constant, it can be established that the concentration of $N_2$ in water is 1,372.84 ppb and the concentration of $O_2$ in water is 8,320 ppb. It is possible to confirm the calculated values with analytical methods.

Depending on altitude and weather patterns, the atmosphere generates a pressure of approximately 1 atmosphere which equates to 14.7 pound per square inch (psi). Unless a liquid, such as a beverage, is subjected to a process to remove gas (de-aeration) or is infused with a gas under pressure, the gas content of the beverage upon sealing into a container will be no different than if the liquid had been left open to the atmosphere. The liquid will contain a similar amount of $O_2$ gas as calculated above, approximately 8,300 ppb.

Also, the application of closures to a container generally necessitate that a container cannot be filled to its brim. The space not occupied by liquid will be occupied by some amount of gas. Typically the volume not occupied by liquid is referred to as the "headspace". If the headspace is not flushed or swept with a gas other than air, the atmosphere in the headspace will be air. If a liquid at 25°C is in equilibrium with the air at the instant of its filling and sealing into a container, the air in the headspace region of the container will not yield a gauge pressure reading above zero. The gas pressure within the container (absolute) is the same as the pressure on the exterior of the container and pressure gauges typically provide readings (gauge pressure) only when pressure exceeds absolute pressure.

As is commonly understood, aqueous phase beverages can be "carbonated". Carbonation is a process in which carbon dioxide is dissolved into water. The amount of carbon dioxide that can enter into solution is dictated by Henry's law in the same manner as the gases contained in air. Henry's constant for $CO_2$ is approximately 3.4 x $10^{-2}$ (mol/L*atm). Given identical partial pressures, $CO_2$ is 26 fold more soluble than is $O_2$. Employing special design vessels, it is possible to expose water to an atmosphere of nearly pure, pressurized $CO_2$ such that water becomes charged with a pre-determined volume of $CO_2$. It is common for scientific references to report the absorption of gas by liquid in terms of milliliters of the gas per liter of liquid. A liter of water at 15.5 °C (60°F) that is in immediate contact with a gas phase that is 1 atmosphere $CO_2$, will absorb exactly 1 milliliter of $CO_2$. Because $CO_2$ possesses a density of 1.96g/ml at 15.5 °C, it is also true that at 15.5 °C, 1 atmosphere of $CO_2$ in immediate contact with water will result in a $CO_2$ concentration of 1.96g per liter. Because the gas pressure is 1 atm. such a liquid when enclosed in a hermetically sealed container will exhibit a gauge pressure of 0 psi. (1 atmosphere absolute pressure).

Underlying gas laws dictate that if the volumes of the liquid and gas and temperature are held constant, the doubling of gas in the gas phase will result in the doubling of gas pressure. A liter of water at 15.5 °C (60°F)

that is exposed to $CO_2$ present at 2 atmospheres (14.7 psi. gauge) will absorb 2 volumes of $CO_2$ or 2*1.96 grams $CO_2$ It is through such a process that carbonated beverages are formulated. Typical $CO_2$ volumes in beverages range from 2 to 4.5 volumes of $CO_2$. Typically, the addition of carbon dioxide ($CO_2$) to product (carbonation) is achieved by allowing a stream of beverage to be exposed to pressurized, gaseous phase $CO_2$ within the confines of a pressure vessel.

The action of carbonation does not serve to expel other gases from water. In order to remove measurable quantities of oxygen from water, the water need be subjected to a process known as de-aeration. Water employed in the making of beverage may or may not be subjected to de-aeration. Furthermore, the extent or degree of de-aeration various with category of product. Manufacturers of beer generally employ an extensive de-aeration process such that the oxygen content of beer in package is less than 0.2 ppm (200ppb). Carbonated beverage manufacturers employ less exacting de-aeration processes. Typically, the ingredients or formulated beverages are not subjected to any type of de-aeration in order to avoid scalping of volatile flavor components. Upon filling of carbonated beverage into a container, a small amount of $CO_2$ is lost from the beverage and enters the headspace region. Consequently, some but not all, of the air which had occupied the headspace is displaced. Survey data of product from store shelves indicate that oxygen content of canned, carbonated beverage can range from 500 to > 4500 ppb and averages very close to 1200 ppb. Products packaged into glass trend to higher concentrations of $O_2$, ranging from 750-4500 ppb in a survey of products from different manufacturing companies and manufacturing localities. Product in PET containers contains an initial $O_2$ concentration of about 1000-1500 ppb $O_2$. Over time, the concentration increases to between 2,500 to 3,000 ppb. This reflects the fact that PET is permeable to $O_2$ and that over a period of time, the tendency is the concentration of $O_2$ into container to achieve equilibrium with the atmosphere (about 8300ppb). The initial $O_2$ concentration in carbonated beverages reflects a number of phenomena. As previously stated, the water employed for production is generally treated by de-aeration methods. Water is typically mixed in various ratios with concentrates. Typically, the concentrates are not subject to de-aeration and they will contain a measurable amount of oxygen. Also, immediately after filling, the quantity of $CO_2$ in the headspace serves to displace some quantity of air.

The fact that carbonated beverages contain a measurable amount of oxygen is relevant for two important reasons with regard to stability against spoilage by various microorganisms. First, a quantity of oxygen is available to the microorganisms and spares the organisms from having to employ less efficient energy gathering metabolic pathways such fermentative or anaerobic respiration. Energy gathered by metabolic pathways is employed in the assembly of complex molecules which are required for growth and reproduction. Reports in the literature indicate that the types of organisms that are able to spoil carbonated beverages are not generally limited in their ability to spoil product through restriction of the $O_2$ content. This is true at least when the initial oxygen concentrations that is in excess of 200 ppb. Data generated for this study serves to confirm this point (Background Example 1, FIG. 1). As previously indicated, the majority of carbonated products, including beer, possess an initial $O_2$ in excess of 1000 ppb. Second, a quantity of oxygen in excess of 1000 ppb is a relatively large fraction of the amount of oxygen which would be present in un-treated water (8,350 ppb) that is openly exposed to air.

In addition to the nutritive element of $O_2$ with regard to growth of spoilage organisms, it is also true that $O_2$ can act to degrade compounds through mechanisms which do not necessitate the consumption of oxygen in the reaction. Such reactions are a consequence of the formation of reactive oxygen species (ROS) wherein oxygen merely serves as an intermediate in the transfer of electrons in REDOX type reactions which ultimately result in the degradation of more complex molecules such as pimaricin. In this regard, $O_2$ behaves similar to a catalyst. Similar to many reactions involving catalyst, the amount of oxygen required to drive in such reactions is very small. In this regard, it is of interest to evaluate the stability of pimaricin in solution under differing conditions of oxygen tension. Clearly, it is also of interest to establish whether the formation of a complex between pimaricin and β-cyclodextrin serves to stabilize pimaricin from degradation by reaction with oxygen. Background Example 2, FIG. 2 demonstrates how it is possible to establish the rate of degradation of pimaricin in solution. Briefly, pimaricin yields a very distinctive UV-visible spectrum with 3 separate absorption maxima. As pimaricin degrades, the peak heights diminish. Degradation can be tracked through the diminishing peak height of any single peak maxima or through changes in relative peak height.

Given a method to monitor the changes in concentration of pimaricin, it is then possible to establish whether pimaricin degrades differently as a function of variables such as initial oxygen tension of solution. Background Example 3, FIG. 3 captures results for the degradation of pimaricin over a time period of several months as a function of initial oxygen tension and the presence or absence of a complex between pimaricin and β (beta) cyclodextrin. Herein, it would seem that pimaricin degrades quite quickly when not complexed and when present in water containing oxygen in excess of 8500ppb. Lowering the oxygen concentration to 3500 ppb does not measurably impact the rate of degradation. When pimaricin is in complex with β (beta) cyclodextrin in the presence of 8500 ppb $O_2$, the degradation is slowed, but is not prevented.

As is apparent, pimaricin (natamycin) is an antifungal agent that is measurably prone to oxidation. Degradation of pimaricin results in the loss of antifungal activity. One would be incorrect in assuming that the addition of pimaricin to a suspension of organisms results in the instantaneous elimination of all viable organisms. It is equally incorrect to assume that all organisms are destroyed or otherwise prohibited from growth after an exposure to pimaricin of only a few hours or even days. To this end, it need be noted that measured values such as Minimum Inhibitory Concentration (MIC) or Minimum Lethal Concentration (MLC) can be somewhat misleading. Technically, MLC is the minimum concentration which results in death of some, but not necessarily all, organisms in a population or sample. Similarly the MIC is a concentration of substance which serves to reduce the rate of development among the majority, but not all, organisms in a population. Over time, organisms that are more tolerant than are the average organisms in the population can continue to grow at near normal rates. Importantly, if the initial concentration of antifungal agent was, in fact, inhibitory to the whole of the population, it is possible that degradation of the antifungal agent will cause a drop in effective concentration such that a sub-set of organisms can resume growth.

In fact, this is the result found when organisms which are able to spoil carbonated beverages are caused to be present in beverage with differing initial concentrations of pimaricin. Example 2, Table 1, provides data indicating that after several weeks after onset of a study in which spoilage yeast were inoculated into a carbonated beverage with concentrations of pimaricin, spoilage develops.

The onset of spoilage over time is a reflection of initial concentration of pimaricin. The table emphasizes the relatively slow onset of spoilage over a relatively long period of time but which is still unacceptable from the perspective of shelf life expectations. Importantly, only those samples which contained 25 ppm pimaricin remain free of spoilage for duration of shelf-life.

In the absence of analytical data about the stability of pimaricin in solution, the interpretation of the data about the stability of product over time can be interpreted in one of two ways. Either no degradation of pimaricin occurred and product spoiled because of the outgrowth of those few organisms that were tolerant to the quantity of pimaricin present or spoilage occurred as a consequence of the survival and then outgrowth of organisms as a consequence of the degradation of pimaricin below some critical concentration. A strong argument for the latter is offered in Background Example 4, FIG. 4. Herein, the degradation of pimaricin is tracked from initial concentrations of 13 and 25 ppm in parallel with previously established incidence of spoilage in samples that initially contain 13 and 25 ppm. It need be recalled that product containing 25 ppm pimaricin did not suffer any spoilage among samples evaluated and samples containing an initial concentration of 13 ppm pimaricin were subject to a 33% incidence of spoilage, but only after 80 days incubation. The intersect between the time of onset of spoilage and the degradation plot for 13 ppm pimaricin indicates that spoilage ensues when the pimaricin concentration drops below 1.5 to 2 ppm. Not surprisingly, the concentration of pimaricin in samples that initially contained 25 ppm does not fall below the 1.5-2 ppm range during the course of the expected shelf-life and so no spoilage arises. Notably, the test was performed in a carbonated beverage containing 3.6 volumes $CO_2$. Product contains in excess of 2000 ppb $O_2$.

The results are relevant for two reasons. First, if it were possible to maintain the concentration of pimaricin at 2-3 ppm, then product could be preserved from spoilage by the types of yeast organisms that are prone to spoil carbonated beverages for a period equal to the required shelf-life of the product. These results are generally surprising and would not be generally anticipated by someone practiced in the art. Generally the reported MIC values for the types of yeast which can spoil carbonated beverage in the range of at least ≥10 ppm. The other relevant point is that any chance of preserving product with pimaricin would seem to depend on the addition of as much as 25 ppm pimaricin at the outset. This is problematic in that 25ppm pimaricin is generally cost prohibitive and, more importantly, is beyond what would be allowed by regulatory agencies. Regulatory agencies often assign a limit to the total amount of a substance which can be consumed across the whole breath of products into which the substance is introduced. For pimaricin, the daily allowable intake (ADI) is on the order of 0.3mg per kg of body weight. A very large fraction of the ADI for pimaricin occurs with consumption of meat and cheese products. Because regulatory agencies assess ADI on the basis of the initial concentration of ingredient and so there is no allowance for degradation of pimaricin over time. It is estimated that the limit of pimaricin in beverage will be no greater than 10 ppm and may be as low as 5 ppm.

All said, it is not possible to employ pimaricin as a preservative in a beverage unless the initial concentration is less than 6 ppm and can be maintained over a period of time equivalent to the shelf life (120 days) at a concentration of at least 2 ppm. Results in hand indicate that pimaricin is not sufficiently stable in carbonated beverages despite measurably reduced $O_2$ content compared to aqueous based liquids that are not carbonated. Further, pimaricin that is in complex of with β-cyclodextrin is not measurably protected from degradation. pimaricin in complex with β-cyclodextrin degrades at a rate about 60% as fast as does pimaricin in the absence of β-cyclodextrin. Although an improvement, the initial concentration of pimaricin in beverage would still need to be between 17 and 20 ppm in order to be assured of product stability.

It is thus unexpected and surprising to find that pimaricin in complex with β-cyclodextrin proves measurably stable when in solution that is under pressure from a headspace gas other than oxygen. It is equally surprising and unexpected that product can be preserved with an initial concentration of pimaricin as little as 0.1 to 5 ppm. It is particularly surprising to find that product can

be preserved with a concentration of pimaricin that is between 0.5 and 1 ppm because only one other substance is known to be measurable biostatic at such concentrations (nisin). It is only possible to speculate about how pressure serves to induce potency. Similarly, it is unclear how pressure from headspace gas can act in concert with β-cyclodextrin in a manner that alters the degradation rate of pimaricin. Although not wishing to be bound by theory, it is possible that pressure serves to force the portion of pimaricin bound by the core of cyclodextrin into a position which causes one or more double bonds to be less accessible than in the absence of the pressure gradient.

When present in a solution that is subject to the pressure generated by 3.7 volumes of $CO_2$ (32 psi at 60°F), the patterns of degradation for pimaricin in complex with β-cyclodextrin is very different than is the pattern of degradation for pimaricin that is free of β-cyclodextrin. First and foremost, the relative height of peak maximum is maintained over time. Secondly, the rate of degradation appears to be bi-modal. (Background Example 5, FIG. 5). In all, the chemical structure of pimaricin is generally maintained throughout the time frame of the test and it is quite possible that this is a very important contributing factor in the ability of pimaricin to demonstrate an MIC at the incredibly low perceived concentration of 0.8ppm. The bi-modal pattern of degradation likely reflects the fact pimaricin that is free from β-cyclodextrin will degrade at a different rate than pimaricin that is bound to β-cyclodextrin. In fact, at concentrations below 20 ppm, very little pimaricin would be associated with β-cyclodextrin. It would seem that the pressure from headspace gas may actually induce the formation of complex (by way of estimate, maybe as much as 37% pimaricin is bound).

In summary, a strong correlation is understood to exist between extent of oxidation of pimaricin and its loss of antifungal activity. Pimaricin can be stabilized against oxidation by a two-step process. The biological activity of pimaricin is not only preserved but may possibly be enhanced because of the two step process.

In the first step of the process, pimaricin is caused to be in complex with β-cyclodextrin. The resulting complex is a type known as an inclusion complex; one component (host) forms a cavity into which a second molecule (guest) can insert in the absence of a covalent attachment. Through the formation of the complex, pimaricin can be present in aqueous solutions at a concentration in excess of 400 ppm. This is an important feature when batching product for preparation of bottling. Generally, ingredients in preparation for batching will need be present at a concentration that is at least 5 fold greater than is present in final product. This is because the ingredients are prepared as a concentrate and are then blended with water in a manner that results in a 4 or 5 fold dilution of concentrate.

A dilution which results in a concentration of pimaricin of less than 20 ppm will cause all pimaricin to be free of β-cyclodextrin. However, the evidence to date indicates that the subjection of a solution containing pimaricin that is <25 ppm to certain amounts of pressure will force pimaricin back into complex with β-cyclodextrin. The amount of pimaricin in complex is several fold less than exists in complex when pimaricin is in excess of 25 ppm. However, the pimaricin bound to cyclodextrin is measurably stable from degradation. Oxygen is normally present in the beverage at a concentration of at least 2500 ppb and can be as high as 5500 ppb. Degradation occurs, but at a reduced rate relative to what occurs in the absence of β-cyclodextrin.

It is important to appreciate the nature of the arrangement between pimaricin and β-cyclodextrin. The action of β-cyclodextrin is not to "solubilize" pimaricin. Rather, β-cyclodextrin serves as a host molecule to the pimaricin, the guest molecule. The resulting complex is a type known as an inclusion complex; one component (host) forms a cavity into which a second molecule (guest) can insert in the absence of a covalent attachment. The resulting complex is a type known as an inclusion complex. The guest molecule resides preferentially in the space offered by the host because of favorable van der Waals interactions. Unlike the arrangement known as clathrates, the guest molecule is not completely enclosed, but instead resides in a donut hole. In the biochemistry sense of the term, the smaller guest molecule may also be referred to as the "ligand". Typically, the formation of inclusion occurs only in the instance where the concentration of guest molecule exceeds the normal limit of solubility. In the instance of pimaricin, the normal limit of solubility is in the range of 20-25 ppm in a beverage of acid pH at a temperature of 25°C. However, under the influence of pressure from headspace gas, pimaricin is induced to form a complex with β-cyclodextrin even when the concentration of pimaricin is less than 20 ppm. The fraction of pimaricin which enters complex with cyclodextrin is actually quite low in comparison to the binding constant of cyclodextrin for pimaricin, but the amount of pimaricin that is bound is sufficient for the purpose of preserving carbonated beverage.

In the invention, the guest ligand is pimaricin (natamycin) and the host molecule is β-cyclodextrin. It need be noted that pimaricin is a measurably large molecule in comparison to many ligands that typically complex with β-cyclodextrin. As a consequence, it is not possible for the whole of pimaricin to reside within the cavity formed by cyclodextrin. This is readily confirmed by assessing the dimension of the cavity relative to the size of the pimaricin molecule. Consequently, a portion of the molecule juts above the horizon formed by the ring structure of cyclodextrin. Under conditions of Standard Ambient Temperature and Pressure (25°C and 1 atm..), the inclusion complex of pimaricin with β-cyclodextrin allows for a decidedly greater concentration of pimaricin to be present in an aqueous system than can be achieved in the absence of β-cyclodextrin. In the absence of β-cyclodextrin, the limit of solubility for pimaricin in aqueous solution is about 20-25 mg $1^{-1}$. When complexed with β-cyclodextrin, it is possible to achieve 400 mg $1^{-1}$.

An aqueous solution beverage, possessing a pH in the range of 2.4 to 5.6, contained in a sealed container and in immediate contact with a headspace gas wherein the concentration of pimaricin in solution is no greater than 5 ppm. It is possible for pimaricin to be present at a concentration of 1 ppm. Less preferable, but acceptable is a concentration of 0.5 ppm. A quantity of β-cyclodextrin that provides at least a 1:1 ratio of pimaricin and β-cyclodextrin need also be present. This ratio permits a sufficient amount of complex to form such that a sufficient quantity of pimaricin is preserved over a period of 120 days. Only a fraction of pimaricin will remain in complex with β-cyclodextrin when the total concentration of pimaricin is under 20-25 ppm. The fraction will be a reflection of the pressure exerted on the liquid portion of the beverage.

An aqueous solution beverage contained in a sealed container and in immediate contact with a headspace gas. Eventually, (hours) equilibrium will be achieved between the gas absorbed in the liquid and the gas present in the headspace. Upon achievement of equilibrium, a portion of the gas that is present in the liquid and in the headspace will be oxygen. By necessity of this invention, the amount of oxygen must be less than 8300 mcg. Preferentially, the amount of oxygen will be no greater than 5000 mcg. Decidedly preferential is oxygen content of less than 500 mcg. It is noted that the total amount of oxygen in the headspace can be expressed in terms of either concentration (ppb) or in terms of the amount (microgram). Mcg is being used herein and the instant claims since the headspace is not constant for all types of beverages and hence mcg is slightly more accurate unless the type of beverage is known. For examples, Background Example 3, the beverage is known thus ppb is accurate.

Oxygen can be removed from beverage in several ways. A gas other than oxygen can be sparred into the liquid and this will cause displacement of $O_2$ from solution as long as the gas phase over the liquid is charged with the same gas as employed in sparge. For instance, it is possible to displace $O_2$ from solution employing $N_2$ sparge, but the space over top of the liquid need be swept free of oxygen released from beverage by a flow of $N_2$ gas.

An aqueous solution beverage contained in a sealed container and in immediate contact with a headspace gas. The headspace gas need be present in a quantity that will exert a pressure on the beverage that is equivalent to at least 3 atmospheres absolute (2 atmospheres gauge (44.08 psi absolute or 29.39 psi gauge). For reasons other than product stability, the pressure of gas can be as great as is needed. For instance, many carbonated beverages possess $CO_2$ volumes of 4.5 to 4.7 which yields a pressure of 44 psi at 60°C.

The gas employed to provide pressure must be other than oxygen. The gases favored for us are carbon dioxide ($CO_2$) or nitrogen ($N_2$). However, other gases are acceptable to the extent that the gas is inert with regard to ingredients contained in the beverage. Other gases that are generally understood to be inert include argon (Ar), nitrogen monoxide also known as nitric oxide (NO), di-nitrogen monoxide also known as nitrous oxide also known as laughing gas ($NO_2$), sulfur dioxide ($SO_2$), Xenon Xe) Neon (Ne) or helium (He) carbon monoxide (CO). Generally speaking, these gases will be employed in quantities similar to $N_2$ or $CO_2$ in order to provide pressure of greater than 2 atmospheres. The actual quantity of each type of gas that is required is readily determined and will not vary significantly from one type of gas to another.

The gas may be added by means of a sparge in which gas is bubbled through the liquid, or liquefied gas may be added in the form of droplets as is often the case when adding nitrogen (liquid nitrogen). Aqueous phase liquids that have a surface exposed to air will have acquired a quantity of oxygen into the liquid. Unless forcibly removed, the oxygen, upon equilibration, will become part of the headspace gas. It is also possible to add liquid forms of gas which then convert back to gas when mixed with liquid that a temperature in excess of the freezing point of the liquid. It is also possible to measurably reduce the amount of gas (air).

The invention is applicable over a range of pH from 2.4 to at least 5.6, particularly 2.8 to 4.4. The pH has no measurable impact on gas pressure within the container. The solution and gas need be bounded by container which can be sealed, but the container need not be oxygen impermeable. However, the body and seal of the container should serve to measurably retard the ingress of $O_2$ from the atmosphere. The simple act of pressurizing the container with a gas other than $O_2$ generally serves to slow ingress of $O_2$ through polymer films such as Polyethylene terephthalate (PET).

Herein, beverage is defined as a largely aqueous phase solution containing as much as 16 percent solid (as determined by refractometer) in the form of sugars, nutritive substances (vitamins, energy supplements etc) flavors, colors. The invention is applicable for any beverage possessing a pH in the range of 2.5 to 5.6. For example, the invention could be employed with naturally brewed tea which typically possesses a pH of near 5.5. Further, the invention is applicable to the use in any beverage formulation possessing a pH as high as 5.6. Such a pH might occur in certain flavored water or electrolyte replacement formulations.

The risk of spoilage by bacteria or concern to public health from food borne pathogenic bacteria for any product formulation would need be meet by a physical or chemical agent other than pimaricin regardless of pH in the targeted range. pimaricin is only effective against yeast and mold fungi. The means of prohibiting the outgrowth of bacteria are varied. Weak organic acids are added to many types of beverages in order to achieve a pH below 4.5. By so doing, the beverage achieves the regulatory status of an "acidified" food or a "high acid

food beverage". 100% juices derived from most fruits are naturally acidic and possess pH of less than 4.5. Such products are unable to sustain the growth of all known pathogenic organisms that most often associated with foodborne infection.

Although unable to sustain the growth of pathogens, such products, in the absence of intervention by chemical or physical agents, are able to support the growth of other microorganisms such as mold fungi, yeast fungi Lactic Acid Bacteria (LAB), Alicyclobacillus and Acetobacter. Organisms which spoil product but are not of concern from a health perspective are herein referred to collectively as "spoilage organisms". Often, these organisms can be inhibited from growing in beverages by denying the availability of nutrients in concentrations that are necessary to satisfy growth requirements of bacteria. Generally speaking bacteria are more fastidious than are yeast and mold fungi. For instance, many types of spoilage bacteria require the presence of one or more vitamins in order to grow in beverages.

In addition or in place of nutrient deprivation, the complex of β-cyclodextrin and pimaricin can be complemented by the presence of other substances known to possess antimicrobial activity. Combining two or more antimicrobial substances into a single formulation allows for the possibility of a "multiple hurdle effect" wherein multiple metabolic processes are inhibited to a degree that the organism is unable to grow and reproduce. Substances such as sequesterants, organic acids and phenolic compounds, such as terpenes, can be employed with pimaricin. To the degree that the complex of β-cyclodextrin and pimaricin can reduce the concentrations of other preservatives, an advantage is gained from the perspective of cost or sensory attributes. The beverage preservative system may further comprise sorbic acid, cinnamic acid, salts thereof, EDTA, ethylenediamine-N,N'-disuccinic acid (EDDS), ethylenediamine-N,N'-dimalonic acid (EDDM), ethylenediamine-N,N'-diglutaric acid (EDDG), sodium hexametaphosphate (SHMP), sodium acid metaphosphate (SAMP), phosphonate, bisphosphonate, *N*-bis-phosphonate. The beverage preservative system may further comprise a radical scavenger (antioxidant) such as ascorbic acid.

In general, the beverage preservative system incorporates a limit to the concentration of chromium, aluminum, nickel, zinc, copper, manganese, cobalt, calcium, magnesium, and iron cations in the range of about 1.0 mM or less, e.g., about 0.5 mM to 0.75 mM, about 0.54 mM or less. The present invention may optionally include the use water to batch product that has been treated to remove metal cations in order to achieve targeted concentrations of minerals that are employed by microorganisms during growth. As opposed to the teachings of US 6,268,003, the preferred method of treatment is via physical processes reverse osmosis and or electrodeionization. Treatment by chemical means, as taught in US 6,268,003 is acceptable, but is not preferred. The use of chemical means to reduce water hardness often results in an increase in the concentration of specific mono-valent cations, e.g., potassium cations, that serve to compromise the invention described herein. In certain exemplary embodiments, the added water has been treated by reverse osmosis, electro-deionization or both to decrease the total concentration of metal cations of chromium, aluminum, nickel, zinc, copper, manganese, cobalt, calcium, magnesium, and iron to about 1.0 mM or less.

As commonly understood in the art, the definitions of the terms "preserve," "preservative," and "preservation" fail to convey any specificity in regard to the period of time for which a substance or formulation will remain free of spoilage. Additionally, the term "preserved" can also mean freedom from events other than microbial spoilage. For instance, a product may be preserved from ingredient decomposition, loss of sensory attributes or discoloration. Consequently, the term preservation need be provided context in order to convey any scientific or practical relevance. As used herein, the stand alone terms "preserve," "preservative," and "preservation" refer to the complete prevention of spoilage resulting from the presence <u>and</u> growth of the general class of microorganisms known as high acid spoilage microorganisms for a period of at least 120 days. Specific to the use of pimaricin in this document, the terms "preservation", "preservative" and "preserve" are restricted to mean preservation against yeast that are able to spoil high acid beverages. Representative, but non-inclusive, types of yeast for which pimaricin is an effective preservative in this invention are species in the genus's *Brettanomyces, Saccharomyces, Zygosaccharomyces, Candida, Debaryomyces, Kloeckera, Rhodotorula, and Toruolopis.*

The period of 120 days over which product must remain free of spoilage is reflective of the time required to transport a beverage product from location of manufacture, through distribution channels, into the hand of the consumer. Absence of spoilage is noted by absence any evidence of growth of spoilage organisms (turbidity, viable count, direct microscopic count or other standard methods of enumeration) and by the absence of any discernible change in the product attributes that could be routinely attributed to metabolism of spoilage organisms.

As used herein, the term "inhibit" is understood to mean stop or to prevent completely.

Typically, the product is preserved under ambient conditions, which include the full range of temperatures experienced during storage, transport, and display (e.g., 0°C to 40°C, 10°C to 30°C, 20°C to 25°C) without limitation to the length of exposure to any given temperature.

Pimaricin is a natural bio-active compound that serves to prohibit the growth of yeast and mold fungi. Another common name for pimaricin is natamycin. The IUPAC systematic name for natamycin is (IR, 3S, 5R, 7R, 8E, 12R, 14E, 16E, 18E, 20E, 22R, 24S, 25R, 26S)-{[3S, 4S, 5S, 6R)-4-amino-3,5-dihydroxy-6-methyloxan-2-yl]oxy} - 1,3,26 trihydroxy-12-methyl-10-oxo-6,11,28 - trioxatricyclo [22.3.1.$0^{5,7}$] octacosa-8,14,16,18,20 pentaene-25-carboxylic acid. A second rendition of the IUPAC name for the pimaricin ($C_{33}H_{47}NO_{13}$) is 22-[(3 amino-3,6-dideoxy-B-D-mannopyranosyl)-oxy]-1,3, 26-trihydroxy-12-methyl-10-oxo-6,11,28-trioxatricyclo [22.3.1.$0^{5,7}$] octacosa-8,14,16,18,20 pentaene-25-carboxylic acid. Pimaricin has been assigned the CAS number 7681-93-8. It is approved for use in at least some foods (for instance, European food additive number is E235 (preservative) and E1201 (stabilizer) and the recommended ADI is 0- 0.3mg/kg of body weight.

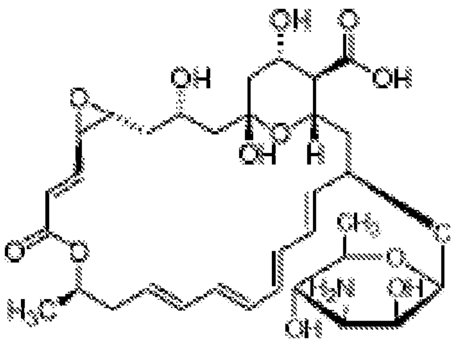

PIMARICIN

Pimaricin is a white, tasteless, and odorless compound. The antimicrobial activity is stable to at least short exposures of 120 °F and does not decompose at a measurable rate unless temperatures exceed 356 °F. Unfortunately, pimaricin is not particularly soluble in aqueous solutions. It demonstrates solubility in pure water (25 °C) of only 0.052 mg/ml (52 mg/L,) where pH is estimated to be approximately 6.4. (Pimaricin, possesses a single carboxylic group that drives the acidic pH value)

"Minimal inhibitory concentration" (MIC) is another term for which no standard time period is routinely defined or understood. In the medical fields, MIC is frequently employed to designate the concentration of a substance which prohibits the growth of a single type of microorganism in over-night incubation as compared to a positive control without the substance (see Wikipedia). However, the rest of the scientific community has adopted the term MIC to mean any of a number of conditions of period of incubation and degree of inhibition.

Even within the medical field, it is recognized that an MIC value developed over a period of 24 hours incubation may not be the same value developed after 48 hours or longer. Otherwise stated, a substance may exhibit an observable MIC during the first 24 hours of an experiment, but exhibit no measurable MIC relative to the positive control after 48 hours.

Beverage products according to the present invention include both still and carbonated beverages. Herein, the term carbonated beverage is inclusive of any combination of water, juice, flavor and sweetener that is meant to be consumed as an alcohol free liquid and which also is made to possess a carbon dioxide concentration of 0.2 volumes of $CO_2$ or greater. The term "volume of $CO_2$" is understood to mean a quantity of carbon dioxide absorbed into the liquid wherein one volume $CO_2$ is equal to 1.96 grams of carbon dioxide ($CO_2$) per liter of product (0.0455M) at 25°C. Non-inclusive examples of carbonated beverages include flavored seltzer waters, juices, cola, lemon-lime, ginger ale, and root beer beverages which are carbonated in the manner of soft drinks, as well as beverages that provide health or wellness benefits from the presence of metabolically active substances, such as vitamins, amino acids, proteins, carbohydrates, lipids, or polymers thereof. Such products may also be formulated to contain milk, coffee, or tea or other botanical solids. It is also possible to formulate such beverages to contain one or more nutraceuticals. Herein, a nutraceutical is a substance that has been shown to possess, minimally, either a general or specific health benefit or sense of wellness as documented in professional journals or texts. Nutraceuticals, however, do not necessarily act to either cure or prevent specific types of medical conditions.

Herein, the term "still beverage" is any combination of water and ingredient which is meant to be consumed in the manner of an alcohol free liquid beverage and which possesses no greater than 0.2 volumes of carbon dioxide. Non-inclusive examples of still beverages include flavored waters, tea, coffee, nectars, mineral drinks, sports beverages, vitamin waters, juice-containing beverages, punches or the concentrated forms of these beverages, as well as beverage concentrates which contain at least about 45% by weight of juice. Such beverages may be supplemented with vitamins, amino acids, protein-based, carbohydrate-based or lipid-based substances. As noted, the invention includes juice containing products, whether carbonated or still. "Juice containing beverages" or "Juice beverages", regardless of whether still or carbonated, are products containing some or all the components of a fruit, vegetable or nuts or mixture thereof that can either be suspended or made soluble in the natural liquid fraction of the fruit.

The term "vegetable," when used herein, includes both fruiting and the non-fruiting but edible portion of plants such as tubers, leaves, rinds, and also, if not otherwise indicated, any grains, nuts, beans, and sprouts which are provided as juices or beverage flavorings. Unless dictated by local, national or regional regulatory agencies the selective removal of certain substances (pulp, pectins, etc) does not constitute an adulteration of a juice.

By way of example, juice products and juice drinks can be obtained from the fruit of apple, cranberry, pear, peach, plum, apricot, nectarine, grape, cherry, currant, raspberry, goose-berry, blackberry, blueberry, strawberry, lemon, orange, grapefruit, passionfruit, mandarin, mirabelle, tomato, lettuce, celery, spinach, cabbage, watercress, dandelion, rhubarb, carrot, beet, cucumber, pineapple, custard-apple, coconut, pomegranate, guava, kiwi, mango, papaya, watermelon, lo han guo, cantaloupe, pineapple, banana or banana puree, lemon, mango, papaya, lime, tangerine, and mixtures thereof. Preferred juices are the citrus juices, and most preferred are the non-citrus juices, apple, pear, cranberry, strawberry, grape, papaya, mango and cherry.

The invention could be used to preserve a formulation that is essentially 100% juice but the product cannot be labeled to contain 100% juice. The invention can be used in products containing juice wherein juice concentration is below 100%. Lowering of juice concentration below 10% will typically favor the use of lowered concentrations of preservatives. Formulations containing juice concentrations as high as 10% may be preserved by this invention and certainly a beverage containing less than 10% juice would be preserved by this invention a beverage containing no more than 5% juice would be preserved by this invention. Any juice can be used to make the beverage of this invention. If a beverage concentrate is desired, the fruit juice is concentrated by conventional means from about 12° Brix to about 65° Brix. Beverage concentrates are usually 40° Brix or higher (about 40% to about 75% sugar solids.)

Typically, beverages will possess a specified range of acidity. Acidity of a beverage is largely determined by the type of acidulant, its concentration, and the propensity of protons associated with the acid to dissociate away from the acid when the acid is entered into solution ($pk_A$). Any solution with a measurable pH between 0-14 possesses some, as reflected in the measurable or calculable concentration of free protons. However, those solutions with pH below 7 are generally understood to be acidic and those above pH 7 are understood to be basic. The acidulant can be organic or inorganic. A non-exclusive example of inorganic acids is phosphoric acids. Non-exclusive examples of organic acids are citric, malic, ascorbic, tartaric, lactic, gluconic, and succinic acids. Non-exclusive examples of inorganic acids are the phosphoric acid compounds and the mono- and di-potassium salts of these acids. (Mono- and di-potassium salts of phosphoric acid possess at least one proton that can contribute to acidity.)

The various acids can be combined with salts of the same or different acids in order to manage pH or the buffer capacity of the beverage to a specified pH or range of pH. The invention can function at a pH as low as 2.6, but the invention will better function as the pH is increased from 2.6 up to pH 7.2. For high acidic beverages, the invention is not limited by the type of acidulant employed in acidifying the product. Virtually any organic acid salt can be used so long as it is edible and does not provide an off-flavor. The choice of salt or salt mixture will be determined by the solubility and the taste. Citrate, malate and ascorbate yield ingestible complexes whose flavors are judged to be quite acceptable, particularly in fruit juice beverages. Tartaric acid is acceptable, particularly in grape juice beverages, as is lactic acid. Longer-chain fatty acids may be used but can affect flavor and water solubility. For essentially all purposes, the malate, gluconate, citrate and ascorbate moieties suffice.

Certain exemplary embodiments of the beverage product of invention include sports (electrolyte balancing) beverages (carbonated or non-carbonated). Typical sport beverages contain water, sucrose syrup, glucose-fructose syrup, and natural or artificial flavors. These beverages can also contain sodium chloride, citric acid, sodium citrate, mono-potassium phosphate, as well as other natural or artificial substances which serve to replenish the balance of electrolytes lost during perspiration.

In certain exemplary embodiments, the present invention also includes beverage formulations supplemented with fat soluble vitamins. Non-exclusive examples of vitamins include fat-soluble vitamin E or its esters, vitamin A or its esters, vitamin K, and vitamin D3, especially vitamin E and vitamin E acetate. The form of the supplement can be powder, gel or liquid or a combination thereof. Fat-soluble vitamins may be added in a restorative amount, i.e. enough to replace vitamin naturally present in a beverage such as juice or milk, which may have been lost or inactivated during processing. Fat-soluble vitamins may also be added in a nutritionally supplemental amount, i.e. an amount of vitamin considered advisable for a child or adult to consume based on RDAs and other such standards, preferably from about one to three times the RDA (Recommended Daily Amount). Other vitamins which can be added to the beverages include vitamin B niacin, pantothenic acid, folic acid, vitamin D, vitamin E, vitamin B and thiamine. These vitamins can be added at levels from 10% to 300% RDA.

Supplements: The invention can be compromised by the presence of certain types of supplements but it is not an absolute and it will vary from beverage formulation to beverage formulation. The degree to which the invention is compromised will depend on the nature of the supplement and the resulting concentration of specific metal cations in the beverage as a consequence of the presence of the supplement. For example, calcium supplements can compromise the invention, but not to the same degree as chromium supplements. Calcium supplements may be added to the degree that a critical value total calcium concentration is not exceeded Calcium sources that are compatible with the invention include calcium organic acid complexes. Among the preferred calcium sources is "calcium citrate-malate", as described in U.S. Pat. No. 4,786,510 and U.S. Pat. No.4,786,518 issued to Nakel et al. (1988) and U.S. Pat. No. 4,722,847 issued to Heckert (1988). Other calcium sources compatible with the invention include calcium acetate, calcium tartrate, calcium lactate, calcium malate, calcium citrate, calcium phosphate, calcium orotate, and mixtures thereof. Calcium chloride and calcium sulfate can also be included; however at higher levels they taste astringent.

Flavor Component: Beverage products according to the present invention can contain flavors of any type. The flavor component of the present invention contains flavors selected from artificial, natural flavors, botanical flavors fruit flavors and mixtures thereof. The term "botanical flavor" refers to flavors derived from parts of a plant other than the fruit; i.e. derived from bean, nuts, bark, roots and leaves. Also included within the term "botanical flavor" are synthetically prepared flavors made to simulate botanical flavors derived from natural sources. Examples of such flavors include cocoa, chocolate, vanilla, coffee, kola, tea, and the like. Botanical flavors can be derived from natural sources such as essential oils and extracts, or can be synthetically prepared. The term "fruit flavors" refers to those flavors derived from the edible reproductive part of a seed plant, especially one having a sweet pulp associated with the seed. Also included within the term "fruit flavor" are synthetically prepared flavors made to simulate fruit flavors derived from natural sources.

Artificial flavors can also be employed. Non-exclusive examples of artificial flavors include chocolate, strawberry, vanilla, cola, or artificial flavors that mimic a natural flavor can be used to formulate a still or carbonated beverage flavored to taste like fruit. The particular amount of the flavor component effective for imparting flavor characteristics to the beverage mixes of the present invention ("flavor enhancing") can depend upon the flavor(s) selected, the flavor impression desired, and the form of the flavor component. The flavor component can comprise at least 0.005% by weight of the beverage composition.

On a case by case basis, the beverage preservative system according to the present invention is compatible with beverages formulated to contain aqueous essence. As used herein, the term "aqueous essence" refers to the water soluble aroma and flavor materials which are derived from fruit juices. Aqueous essences can be fractionated, concentrated or folded essences, or enriched with added components. As used herein, the term "essence oil" refers to the oil or water insoluble fraction of the aroma and flavor volatiles obtained from juices. Orange essence oil is the oily fraction which separates from the aqueous essence obtained by evaporation of orange juice. Essence oil can be fractionated, concentrated or enriched. As used herein, the term "peel oil" refers to the aroma and flavor derived from oranges and other citrus fruit and is largely composed of terpene hydrocarbons, e.g. aliphatic aldehydes and ketones, oxygenated terpenes and sesquiterpenes. From about 0.002% to about 1.0% of aqueous essence and essence oil are used in citrus flavored juices.

Sweetener Component: The microbiological preservation function of the present invention in single strength beverage formulation is not affected by the type of sweeteners present in the beverage. The sweetener may be any sweetener commonly employed for use in beverages. Sweeteners suitable for use in various embodiments of the beverages disclosed here include nutritive and non-nutritive, natural and artificial or synthetic sweeteners. The sweetener can include a monosaccharide or a disaccharide. A certain degree of purity from contamination by metal cations will be expected. Peptides possessing sweet taste are also permitted. The most commonly employed saccharides include sucrose, fructose, dextrose, maltose and lactose and invert sugar. Mixtures of these sugars can be used. Other natural carbohydrates can be used if less or more sweetness is desired. Suitable non-nutritive sweeteners and combinations of such sweeteners are selected for the desired nutritional characteristics, taste profile for the beverage, mouth-feel and other organoleptic factors. Non-nutritive artificial sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. In certain exemplary embodiments the beverage product employs aspartame as the sweetener, either alone or with other sweeteners. In certain other exemplary embodiments the sweetener comprises aspartame and acesulfame potassium. Other non-nutritive sweeteners suitable for at least certain exemplary embodiments include, for example, sorbitol, mannitol, xylitol, glycyrrhizin, D-tagatose, erythritol, meso-erythritol, malitol, maltose, lactose, fructo-oligosaccharides, Lo Han Guo powder, mogroside V, glycyrrhizin, steviol glycosides, e.g., rebaudioside A, rebaudioside B, rebaudioside C, rebaudioside D, rebaudioside E, steviolbioside, stevioside, dulcoside A etc., *Stevia rebaudiana* extract, acesulfame, aspartame, other dipeptides, cyclamate, sucralose, saccharin, xylose, arabinose, isomalt, lactitol, maltitol, trehalose, ribose, monatin, and protein sweeteners such as thaumatin, monellin, brazzein, D-alanine, and glycine, related compounds, and mixtures of any of them. It will be within the ability of those skilled in the art, given the benefit of this disclosure, to select suitable non-nutritive and nutritive sweeteners and combinations thereof. The amount of the sweetener effective in the beverage mixes of the invention depends upon the particular sweetener used and the sweetness intensity desired.

Thus, aspects of the invention relate to a beverage product in a sealed container according to claim 1 wherein the beverage is substantially not spoiled by microorganisms for a period of at least 16 weeks when stored at room temperature. The beverage may be a carbonated beverage.

The beverage comprises pimaricin in an amount from 0.1 to 6 ppm, 0.1 to 5 ppm, 0.1 to 4 ppm, 0.1 to 3 ppm, or 0.1 to 2 ppm. The beverage further contains cyclodextrin. The pH of the beverage is 2.4 to 5.6, in particular 2.8 to 4.4.

The beverage product further comprises a headspace gas according to claim 1 inert to ingredients

in the beverage wherein pressure of the headspace gas is at least 3 atm absolute. The oxygen present in the headspace gas is an amount less than 8300 mcg, less than 5000 mcg, or less than 500 mcg.

In aspects of the invention, pimaricin and cyclodextrin are added to the beverage as a complex. The ratio of pimaricin to cyclodextrin in the complex is 1:1. The cyclodextrin may be β-cyclodextrin, α-cyclodextrin, γ-cyclodextrin, sulfobutyl ether β-cyclodextrin, hydroxypropyl β-cyclodextrin, randomly methylated β-cyclodextrin, and maltosyl/dimaltosyl β-cyclodextrin.

Further aspects relate to a method of making a beverage in a sealed container according to claim 8 by adding to a container the beverage described above; then adding sufficient headspace gas inert to ingredients in the beverage to provide a pressure of at least 3 atm. absolute, and sealing the container. As noted above, the beverage may be formed by adding the pimaricin and cyclodextrin to the beverage as a complex.

Background Example 1

Oxygen concentration can be growth limiting for some, but not all, spoilage organisms. Organisms were inoculated into mock beverage formulations (2-5% juice, 12 Brix, pH 3.4) and evaluated for evidence of visible growth over a period of 16 weeks.

The oxygen content among samples was adjusted through heating of sample in water bath under blanket of saturated water vapor. Use of septum seals on containers allowed inoculation after samples were cooled. Oxygen concentration was established through use of OXYSENSE® sensors placed on product contact surface of test vessels. For each type of organism, a range of oxygen tension is identified which is either supported growth ( ), did not support growth ( ) or has yet to be tested ( ). Clearly, most organisms grow readily at oxygen concentrations as low as 100 ppb.

As shown in Fig. 1, the bar associated with each organism is divided into 3 ranges 1) range of $O_2$ concentration in which growth was evident, 2) range that remains to be evaluated, and 3) range in which $O_2$ has been shown to be growth inhibitory.

Background Example 2

Pimaricin degrades relatively quickly when in aqueous suspension. Fig. 2 shows a plot of the ratio of Peak 1 versus Peak 2 of the UV-Visible Spectrum of pimaricin in beverage (pH 3.4) as a function of time (a). As shown in Fig. 2, the rate of degradation can be established through changes in the observed UV-visible spectrum of pimaricin (inset B). Freshly prepared samples of pimaricin in water yield a spectrogram of 3 peak 1 (320 nm) peak 2 (304nm) and peak 3 (291 nm). The spectrum of the inset also shows clearly that the absorption maximum for each peak differs from one peak to the next. These differences are a reflection of the conjugated diene structure of pimaricin. As the integrity of the conjugate structure gives way to degradation, the relative peak heights are subject to change.

A prominent feature of degradation is a change in relative peak height over time. Degradation of pimaricin in a carbonated beverage (3.7 volume of CO2) containing 3700 ppb $O_2$ is established by a diminished peak height of peak 1 (320nm) relative to peak 3 (291nm). A very similar plot is obtained when comparing relative peak heights of peak 2 relative to peak 3.

Background Example 3

In water containing 8300 ppb $O_2$, pimaricin alone degrades at a slightly faster rate than does pimaricin complex β-cyclodextrin. As shown in Fig. 3, pimaricin alone in water containing only 3500 ppb $O_2$ degrades at about the same rate as does pimaricin in water containing 8300 ppb $O_2$. The initial concentration of pimaricin in complex ≥400ppm and so pimaricin is fully bound to β-cyclodextrin. Measurements in distilled water at neutral pH and 25°C. Thus, regardless of the presence or absence of a complex with cyclodextrin, pimaricin is subject to degradation over time when in solution.

Background Example 4

In the presence of structurally intact pimaricin, spoilage organisms are inhibited from growth. Once the integrity of the bulk pimaricin is compromised, the organisms are able to grow. Regardless of initial concentration, pimaricin in 3.7 volume $CO_2$ beverage will degrade at the same rate. Commonly, carbonated beverages contain a substantial amount of oxygen (>3500ppb). See Fig. 4. Given a starting concentration of 13.5 ppm, the degradation of pimaricin is such that the concentration of pimaricin falls to below the minimum inhibitory concentration (...) at around 80 days. At this time, spoilage organisms begin to grow and induce spoilage (χ). A starting concentration of 25 ppm pimaricin will give way to a measurable degree of degradation (α) but the concentration of pimaricin does not drop below a critical concentration of about 2ppm and so there is no ensuing spoilage from outgrowth of previously inoculated organisms.

Background Example 5

The change in UV-visible spectrum of pimaricin when complexed with β-cyclodextrin in the presence of 3.7 volumes of $CO_2$ suggests a uniform pattern of decay for the first 20 days, and then a shift to a slower decay rate. See Fig. 5. This may be a reflection of the fact that not all pimaricin in solution is bound to β-cyclodextrin.

The pattern of degradation of pimaricin in solution with cyclodextrin when under pressure from 3.7 volumes of $CO_2$ is different than is the case for pimaricin alone in water and under 1 atmosphere pressure from air. Importantly, the relative peak height (b) of peak 1 &

peak 2 remain nearly constant (as opposed to differing rates of degradation in the absence of $CO_2$, (see Fig. 2).

Degradation still occurs as is evidenced by the paralleled loss of absorption maximum over time of both peak 1 & peak 2 (A). However, degradation is bi-modal. About ½ the pimaricin degrades relatively quickly over the course of 20 days (A) but then the rate of degradation changes and is measurably slower (after 20 days). The pattern is very suggestive of some degree of protection of the conjugated structure in pimaricin from attack by oxygen radical species. The simplest explanation is that some, but not all, pimaricin is forced into the cavity of cyclodextrin because of the pressure from $CO_2$ and this allows some, but not all, pimaricin to be protected from degradation. Possibly, a pressure induced positioning of pimaricin in the cavity of cyclodextrin occurs. In all, the rate of degradation appears to be slowed considerably in the when pimaricin is present in solution with cyclodextrin and the pressure from $CO_2$.

## Example 1

A 16 week trial was conducted with a mock grape 12 Brix 2% grape juice mock glass "pony" 9.8 oz. bottle. Beverages were carbonated to 3.7 and 4.5 volumes. Five containers of each $CO_2$ level were not inoculated and served as negative controls. Five containers of each $CO_2$ level were inoculated with a pooled inoculum of strains of *Saccharomyces Brettanomyces and Zygosaccharomyces* such that an initial cell density of 100 organisms per milliliter was achieved. These samples served as positive controls. Half of the remaining containers received the same inoculum and were also dosed with pimaricin to a concentration of 1.1 mg $1^{-1}$ (mg per liter or mg/L). The remaining containers were dosed with pimaricin in complex with β-cyclodextrin in a manner that yielded a final concentration of pimaricin of 0.8 ppm. All samples were then held at 25°C for the duration of the study. During the course of the study, pimaricin concentration was established in samples employing UV-Visible spectroscopy. The results of study are summarized in FIG. 6.

All positive control samples (no pimaricin or cyclodextrin) were spoiled within 3 days (frequency incidence of 1 = 100%).

The initial concentration of pimaricin in samples without beta-cyclodextrin is 1.1 ppm and in samples with both pimaricin and beta-cyclodextrin it is 0.8ppm For samples containing pimaricin but no cyclodextrin the first note of spoilage was at 20 days and after 100 days the incidence of spoilage among similarly formulated samples was 0.6 (60%). This was true for samples formulated to 3.7 volumes CO2 (α) and 4.5 volumes $CO_2$ (β). Pimaricin in the absence of cyclodextrin was found to degrade over time exhibiting a half-life of about 35 days. No growth is detected for duration of study in samples containing pimaricin and beta-cyclodextrin at either 3.7 (B) or 4.5 (X) volume CO2. Pimaricin in complex with β-cyclodextrin was stable for period of at least 16 weeks.

## Comparative Example 1

A 16 week trial was conducted with commercial carbonated lemon-lime product known as Sierra Mist. This beverage is carbonated to 3.6 volumes $CO_2$ in PET containers. Negative control containers received no inoculum. Positive control samples were inoculated with either *Zygosaccharomyces* strains (907, 28, Marion, HP, Mt. Dew, & SM Soiler) or *Brettanomyces* strains Dan, $H_2O_2$, Cherry 7-UP, 1601-1, and SY-05). The efficacy of pimaricin was evaluated when present at an amount (30 ppm) that just exceeds limit of solubility (25 ppm) in high acid beverage as well as at 5 and 15 ppm. All samples were then held at 25°C for the duration of the study. The results of study are summarized in Table 1 below. None of the samples containing the equivalent of 30 mg pimaricin per ml spoiled during the period of the test (14 weeks, 98 days). 33% of the samples containing 15 ppm spoiled and 100% of samples containing 5ppm pimaricin spoiled. Compare these results in light of the results of Example 1.

| | | Onset of Spoilage | | | |
|---|---|---|---|---|---|
| Expired time | | ppm Pimaricin | | | |
| Weeks | Days | 0 | 5 | 15 | 25 |
| 0 | 0 | 0 | 0 | 0 | 0 |
| 1 | 7 | 100 | 0 | 0 | 0 |
| 2 | 14 | 100 | 0 | 0 | 0 |
| 3 | 21 | 100 | 0 | 0 | 0 |
| 4 | 28 | 100 | 0 | 0 | 0 |
| 5 | 35 | 100 | 0 | 0 | 0 |
| 6 | 42 | 100 | 0 | 0 | 0 |
| 7 | 49 | 100 | 0 | 0 | 0 |
| 8 | 56 | 100 | 0 | 0 | 0 |
| 9 | 63 | 100 | 75 | 0 | 0 |
| 10 | 70 | 100 | 75 | 0 | 0 |
| 11 | 77 | 100 | 100 | 33 | 0 |
| 12 | 84 | 100 | 100 | 33 | 0 |
| 13 | 91 | 100 | 100 | 33 | 0 |
| 14 | 98 | 100 | 100 | 33 | 0 |
| 15 | 105 | 100 | 100 | 33 | 0 |
| 16 | 112 | 100 | 100 | 33 | 0 |
| 17 | 119 | 100 | 100 | 33 | 0 |
| 18 | 126 | 100 | 100 | 33 | 0 |
| 19 | 133 | 100 | 100 | 33 | 0 |
| 20 | 140 | 100 | 100 | 33 | 0 |

(continued)

| | | Onset of Spoilage | | | |
|---|---|---|---|---|---|
| Expired time | | ppm Pimaricin | | | |
| Weeks | Days | 0 | 5 | 15 | 25 |
| 21 | 147 | 100 | 100 | 33 | 0 |
| 22 | 154 | 100 | 100 | 33 | 0 |
| 23 | 161 | 100 | 100 | 33 | 0 |
| 24 | 168 | 100 | 100 | 33 | 0 |

## Claims

**1.** A beverage product in a sealed container comprising:

a beverage having a pH of 2.4 to 5.6 comprising pimaricin present in an amount from 0.1 to 6 ppm, and cyclodextrin; and
a headspace gas selected from the group consisting of carbon dioxide, nitrogen, argon, nitric oxide, nitrous oxide, sulfur dioxide, xenon, neon, helium and carbon monoxide, wherein pressure of the headspace gas is at least 303.98 kPa absolute (3 atm. absolute),
wherein the oxygen is present in the beverage in an amount less than 8300 ppb,
wherein the pimaricin and cyclodextrin are present in the beverage as a complex, and
wherein the ratio of pimaricin to cyclodextrin in the complex is 1:1.

**2.** The beverage of claim 1, wherein the cyclodextrin is selected from the group consisting of β-cyclodextrin, α-cyclodextrin, γ-cyclodextrin, sulfobutyl ether β-cyclodextrin, hydroxypropyl β-cyclodextrin, randomly methylated β-cyclodextrin, and maltosyl/dimaltosyl β-cyclodextrin, preferably β-cyclodextrin.

**3.** The beverage according to any of the preceding claims wherein the oxygen is present in the beverage in an amount less than 5000 ppb, preferably less than 500 ppb.

**4.** The beverage according to any of the preceding claims wherein the pimaricin is present in the beverage in an amount from 0.1 to 5 ppm, preferably in an amount from 0.1 to 3 ppm.

**5.** The beverage according to any of the preceding claims wherein the headspace gas is carbon dioxide or nitrogen.

**6.** The beverage according to any one of the preceding claims wherein the beverage has a pH of 2.8 to 4.4.

**7.** The beverage according to any one of the preceding claims wherein the beverage is a carbonated beverage, and/or wherein the beverage is substantially not spoiled by microorganisms for a period of at least 16 weeks when stored at room temperature.

**8.** A method of making a beverage in a sealed container comprising

a) adding to a container a beverage having a pH of 2.4 to 5.6 and comprising cyclodextrin and pimaricin, wherein the pimaricin is present in the beverage in an amount from 0.1 to 6 ppm;
b) adding sufficient headspace gas selected from the group consisting of carbon dioxide, nitrogen, argon, nitric oxide, nitrous oxide, sulfur dioxide, xenon, neon, helium and carbon monoxide to provide a pressure of at least 303.98 kPa absolute (3 atm. absolute), wherein the oxygen is present in the beverage in an amount less than 8300 ppb; and
c) sealing the container,

wherein the pimaricin and cyclodextrin are present in the beverage as a complex, and
wherein the ratio of pimaricin to cyclodextrin in the complex is 1:1.

**9.** The method according to claim 8, wherein the oxygen is present in the beverage in an amount less than 5000 ppb, preferably less than 500 ppb.

**10.** The method according claim 8 or 9, wherein the pimaricin is present in the beverage in an amount from 0.1 to 5 ppm, preferably from 0.1 to 3 ppm.

**11.** The method according to any one of claims 8 to 10, wherein the headspace gas is carbon dioxide or nitrogen.

**12.** The method according to any one of claims 8 to 11, wherein the beverage has a pH of 2.8 to 4.4, and/or wherein the beverage is a carbonated beverage.

**13.** Beverage according to any of the preceding claims 1-7, obtainable according to the method of any of the claims 8-12.

## Patentansprüche

**1.** Getränkeprodukt in einem verschlossenen Behälter, umfassend:

ein Getränk mit einem pH-Wert von 2,4 bis 5,6 umfassend Pimaricin in einer Menge von 0,1 bis 6 ppm und Cyclodextrin; und
ein Kopfraumgas, ausgewählt aus der Gruppe

bestehend aus Kohlendioxid, Stickstoff, Argon, Stickstoffoxid, Distickstoffoxid, Schwefeldioxid, Xenon, Neon, Helium und Kohlenmonoxid, wobei der Druck des Kopfraumgases mindestens 303,98 kPa absolut (3 atm absolut) beträgt,
wobei der Sauerstoff in dem Getränk in einer Menge von weniger als 8300 ppb vorliegt,
wobei das Pimaricin und Cyclodextrin als Komplex im Getränk vorliegt, und
wobei das Verhältnis von Pimaricin zu Cyclodextrin im Komplex 1:1 beträgt.

**2.** Getränk nach Anspruch 1, wobei das Cyclodextrin ausgewählt ist aus der Gruppe bestehend aus β-Cyclodextrin, α-Cyclodextrin, γ-Cyclodextrin, Sulfobutylether-β-Cyclodextrin, Hydroxypropyl-β-Cyclodextrin, stochastisch methyliertem β-Cyclodextrin und Maltosyl-/Dimaltosyl-β-Cyclodextrin, vorzugsweise β-Cyclodextrin.

**3.** Getränk nach einem der vorhergehenden Ansprüche, wobei der Sauerstoff in dem Getränk in einer Menge von weniger als 5000 ppb, vorzugsweise weniger als 500 ppb vorliegt.

**4.** Getränk nach einem der vorhergehenden Ansprüche, wobei das Pimaricin in dem Getränk in einer Menge von 0,1 bis 5 ppm, vorzugsweise in einer Menge von 0,1 bis 3 ppm vorliegt.

**5.** Getränk nach einem der vorhergehenden Ansprüche, wobei das Kopfraumgas Kohlendioxid oder Stickstoff ist.

**6.** Getränk nach einem der vorhergehenden Ansprüche, wobei das Getränk einen pH von 2,8 bis 4,4 aufweist.

**7.** Getränk nach einem der vorhergehenden Ansprüche, wobei das Getränk ein kohlensäurehaltiges Getränk ist und/oder wobei das Getränk durch Mikroorganismen nicht wesentlich verdorben wird bei Lagerung bei Raumtemperatur für einen Zeitraum von mindestens 16 Wochen.

**8.** Verfahren zur Herstellung eines Getränks in einem verschlossenen Behälter, umfassend

a) Zugeben eines Getränks, das einen pH-Wert von 2,4 bis 5,6 aufweist und Cyclodextrin und Pimaricin umfasst, in einen Behälter, wobei das Pimaricin in dem Getränk in einer Menge von 0,1 bis 6 ppm vorliegt;
b) Zugeben von ausreichend Kopfraumgas, ausgewählt aus der Gruppe bestehend aus Kohlendioxid, Stickstoff, Argon, Stickstoffoxid, Distickstoffoxid, Schwefeldioxid, Xenon, Neon, Helium und Kohlenmonoxid, um einen Druck von mindestens 303,98 kPa absolut (3 atm absolut) bereitzustellen, wobei der Sauerstoff in dem Getränk in einer Menge von weniger als 8300 ppb vorliegt; und
c) Verschließen des Behälters,

wobei das Pimaricin und Cyclodextrin als Komplex im Getränk vorliegt, und
wobei das Verhältnis von Pimaricin zu Cyclodextrin im Komplex 1:1 beträgt.

**9.** Verfahren nach Anspruch 8, wobei der Sauerstoff in dem Getränk in einer Menge von weniger als 5000 ppb, vorzugsweise weniger als 500 ppb vorliegt.

**10.** Verfahren nach Anspruch 8 oder 9, wobei das Pimaricin in dem Getränk in einer Menge von 0,1 bis 5 ppm, vorzugsweise von 0,1 bis 3 ppm vorliegt.

**11.** Verfahren nach einem der Ansprüche 8 bis 10, wobei das Kopfraumgas Kohlendioxid oder Stickstoff ist.

**12.** Verfahren nach einem der Ansprüche 8 bis 11, wobei das Getränk einen pH-Wert von 2,8 bis 4,4 aufweist und/oder wobei das Getränk ein kohlensäurehaltiges Getränk ist.

**13.** Getränk nach einem der vorhergehenden Ansprüche 1 bis 7, erhältlich nach dem Verfahren nach einem der Ansprüche 8 bis 12.

## Revendications

**1.** Produit de boisson dans un récipient scellé comprenant :
une boisson ayant un pH de 2,4 à 5,6 comprenant :

de la pimaricine présente en une quantité de 0, 1 à 6 ppm, et de la cyclodextrine ; et
un gaz d'espace de tête choisi dans le groupe constitué par le dioxyde de carbone, l'azote l'argon, l'oxyde nitrique, l'oxyde nitreux, le dioxyde de soufre, le xénon, le néon, l'hélium et le monoxyde de carbone, la pression du gaz d'espace de tête étant d'au moins 303,98 kPa absolus (3 atm. absolues),
dans lequel l'oxygène est présent dans la boisson en une quantité de moins de 8300 ppb,
dans lequel la pimaricine et la cyclodextrine sont présentes dans la boisson sous forme de complexe, et
dans lequel le rapport de la pimaricine à la cyclodextrine dans le complexe est de 1 : 1.

**2.** Boisson selon la revendication 1, dans laquelle la cyclodextrine est choisie dans le groupe constitué par la β-cyclodextrine, l'α-cyclodextrine, la γ-cyclodextrine, la sulfobutyl éther β-cyclodextrine, l'hydroxypropyl β-cyclodextrine, la β-cyclodextrine méthylée de manière aléatoire et la maltosyl/dimaltosyl β-cyclodextrine, de préférence la β-cyclodextrine.

**3.** Boisson selon l'une quelconque des revendications précédentes dans laquelle l'oxygène est présent dans la boisson en une quantité de moins de 5000 ppb, de préférence de moins de 500 ppb.

**4.** Boisson selon l'une quelconque des revendications précédentes dans laquelle la pimaricine est présente dans la boisson en une quantité de 0, 1 à 5 ppm, de préférence en une quantité de 0, 1 à 3 ppm.

**5.** Boisson selon l'une quelconque des revendications précédentes dans laquelle le gaz d'espace de tête est le dioxyde de carbone ou l'azote.

**6.** Boisson selon l'une quelconque des revendications précédentes dans laquelle la boisson a un pH de 2,8 à 4,4.

**7.** Boisson selon l'une quelconque des revendications précédentes dans laquelle la boisson est une boisson carbonatée, et/ou la boisson est essentiellement non contaminée par des microorganismes durant une période d'au moins 16 semaines lorsqu'elle est stockée à température ambiante.

**8.** Procédé de fabrication d'une boisson dans un récipient scellé comprenant les étapes consistant à :

a) ajouter à un récipient une boisson ayant un pH de 2,4 à 5, 6 et comprenant de la cyclodextrine et de la pimaricine, la pimaricine étant présente dans la boisson en une quantité de 0, 1 à 6 ppm ;
b) ajouter suffisamment de gaz d'espace de tête choisi dans le groupe constitué par le dioxyde de carbone, l'azote, l'argon, l'oxyde nitrique, l'oxyde nitreux, le dioxyde de soufre, le xénon, le néon, l'hélium et le monoxyde de carbone pour fournir une pression d'au moins 303,98 kPa absolus (3 atm. absolues), l'oxygène étant présent dans la boisson en une quantité de moins de 8300 ppb ; et
c) sceller le récipient,

dans lequel la pimaricine et la cyclodextrine sont présentes dans la boisson sous forme de complexe, et dans lequel le rapport de la pimaricine à la cyclodextrine dans le complexe est de 1 : 1.

**9.** Procédé selon la revendication 8, dans lequel l'oxygène est présent dans la boisson en une quantité de moins de 5000 ppb, de préférence de moins de 500 ppb.

**10.** Procédé selon la revendication 8 ou 9, dans lequel la pimaricine est présente dans la boisson en une quantité de 0, 1 à 5 ppm, de préférence de 0, 1 à 3 ppm.

**11.** Procédé selon l'une quelconque des revendications 8 à 10, dans lequel le gaz d'espace de tête est le dioxyde de carbone ou l'azote.

**12.** Procédé selon l'une quelconque des revendications 8 à 11, dans lequel la boisson a un pH de 2,8 à 4,4, et/ou dans lequel la boisson est une boisson carbonatée.

**13.** Boisson selon l'une quelconque des revendications 1 à 7, que l'on peut obtenir selon le procédé de l'une quelconque des revendications 8 à 12.

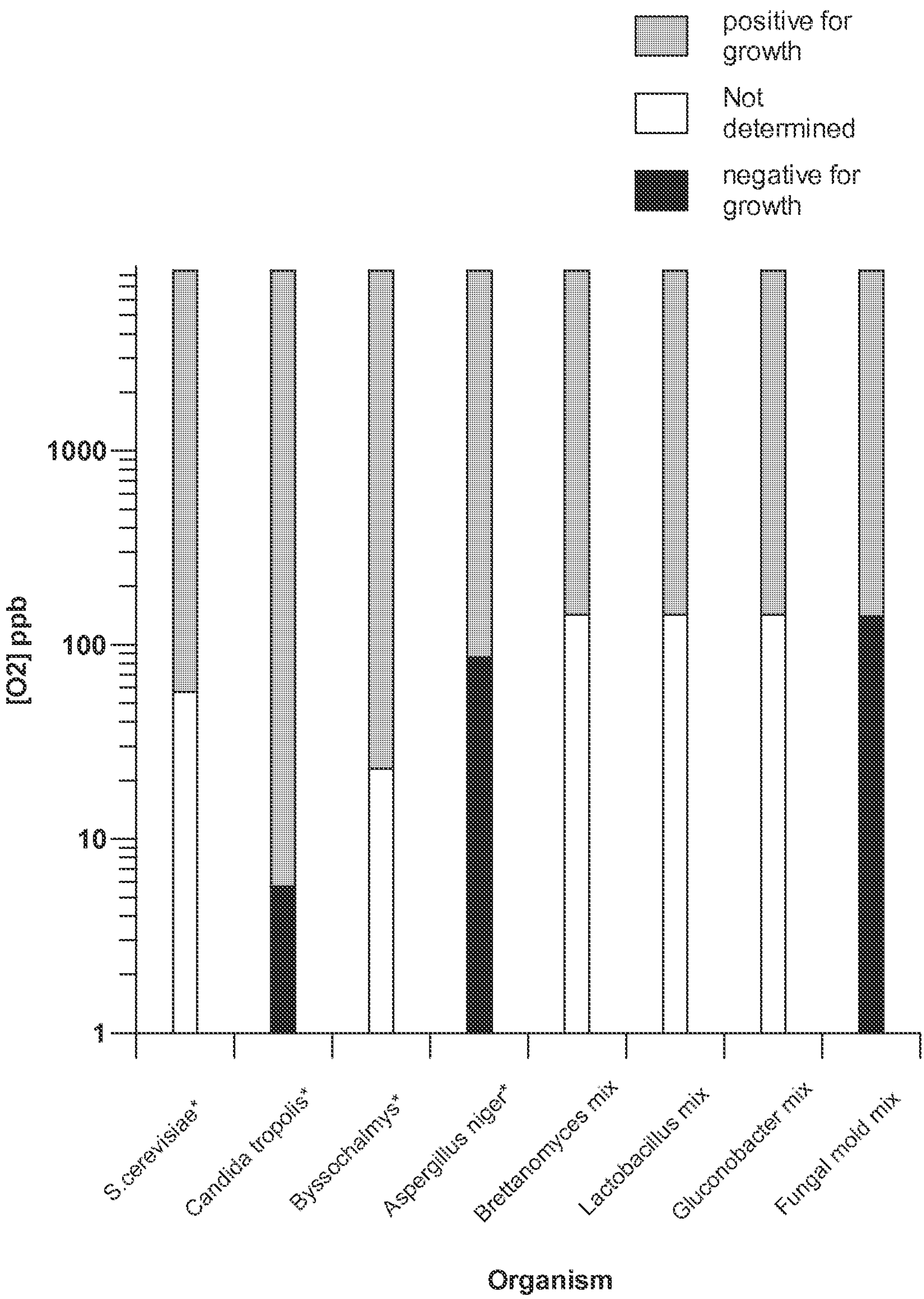
positive for growth
Not determined
negative for growth
[O2] ppb
1000
100
10
1
S.cerevisiae*
Candida tropolis*
Byssochalmys*
Aspergillus niger*
Brettanomyces mix
Lactobacillus mix
Gluconobacter mix
Fungal mold mix
Organism

FIG.1

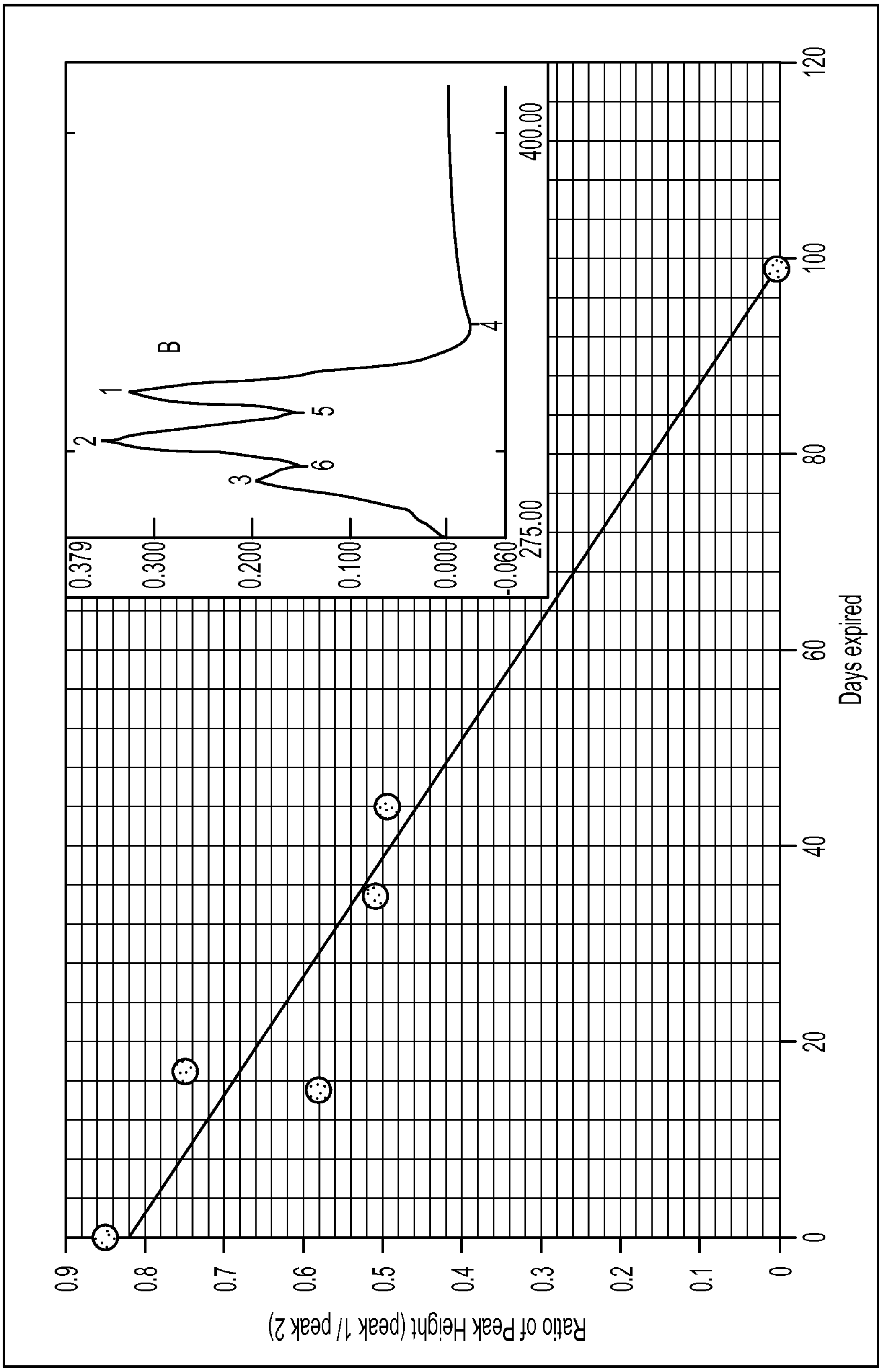


FIG. 2

SUBSTITUTE SHEET (RULE 26)

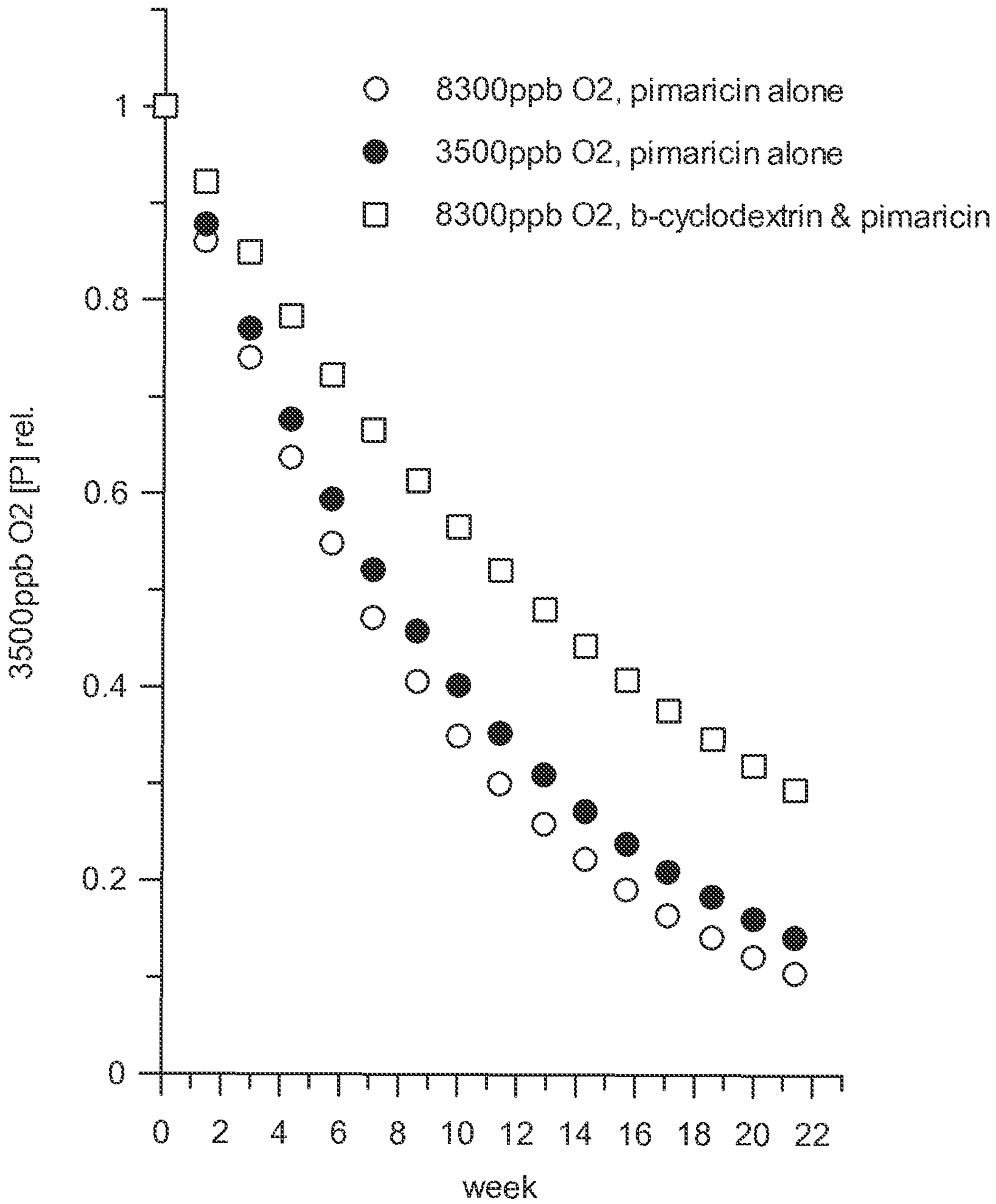
8300ppb O2, pimaricin alone
3500ppb O2, pimaricin alone
8300ppb O2, b-cyclodextrin & pimaricin
3500ppb O2 [P] rel.
1
0.8
0.6
0.4
0.2
0
0
2
4
6
8
10
12
14
16
18
20
22
week

FIG.3

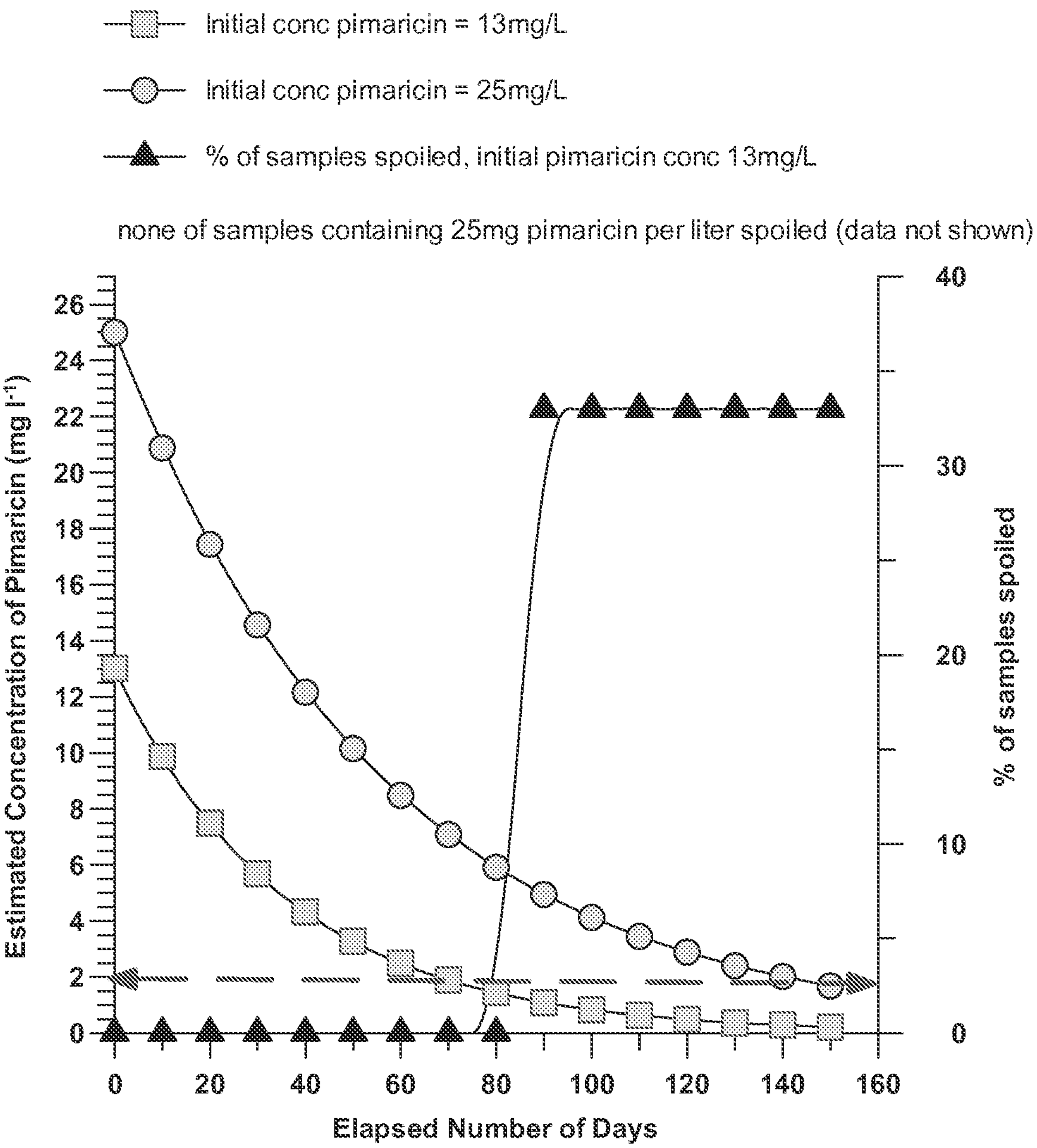

Initial conc pimaricin = 13mg/L
Initial conc pimaricin = 25mg/L
% of samples spoiled, initial pimaricin conc 13mg/L
none of samples containing 25mg pimaricin per liter spoiled (data not shown)
Estimated Concentration of Pimaricin (mg l-1)
0 2 4 6 8 10 12 14 16 18 20 22 24 26
% of samples spoiled
0 10 20 30 40
Elapsed Number of Days
0 20 40 60 80 100 120 140 160


FIG.4

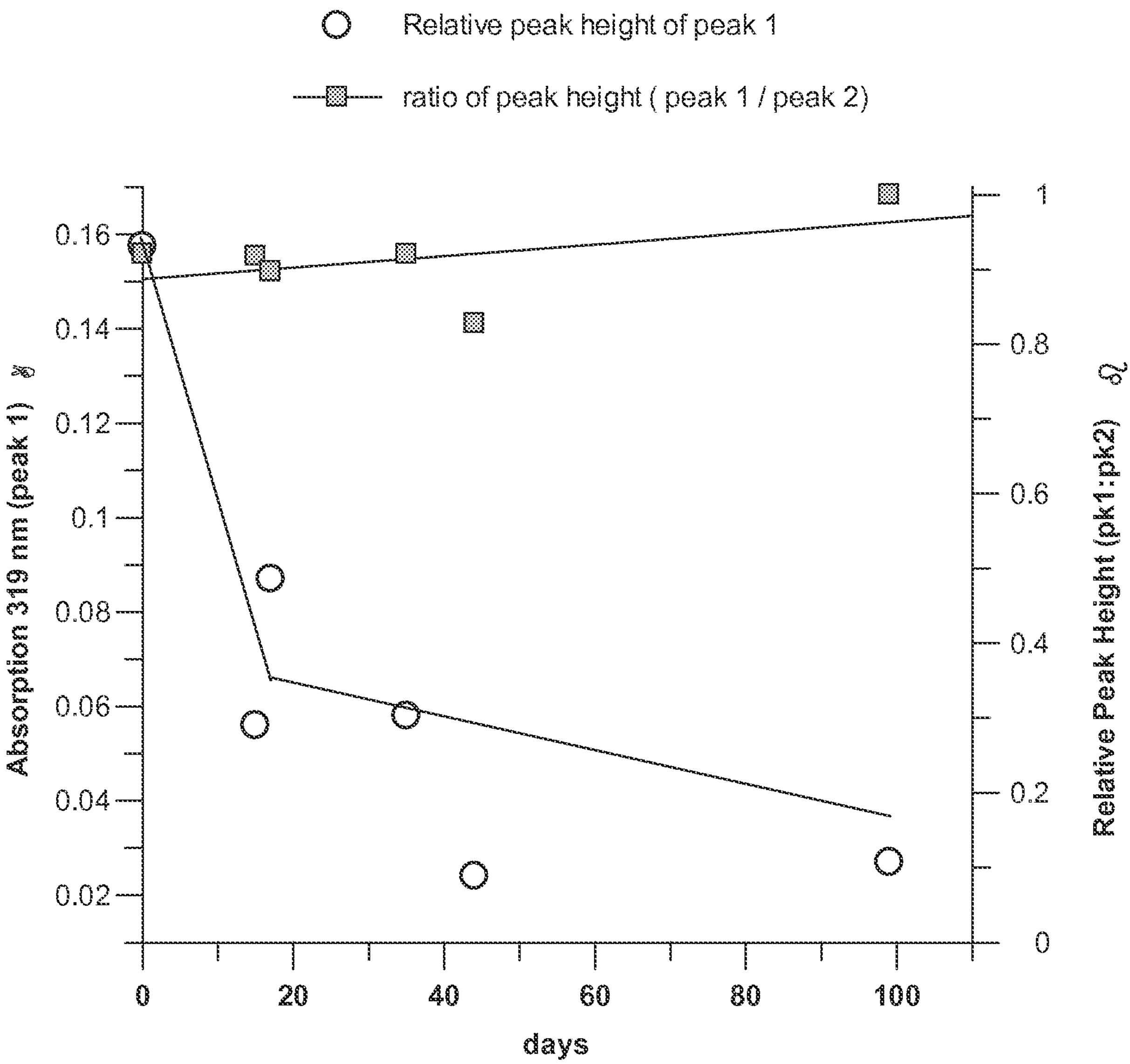
Relative peak height of peak 1
ratio of peak height ( peak 1 / peak 2)
0.16
0.14
0.12
0.1
0.08
0.06
0.04
0.02
Absorption 319 nm (peak 1)
1
0.8
0.6
0.4
0.2
0
Relative Peak Height (pk1:pk2)
0
20
40
60
80
100
days

FIG.5

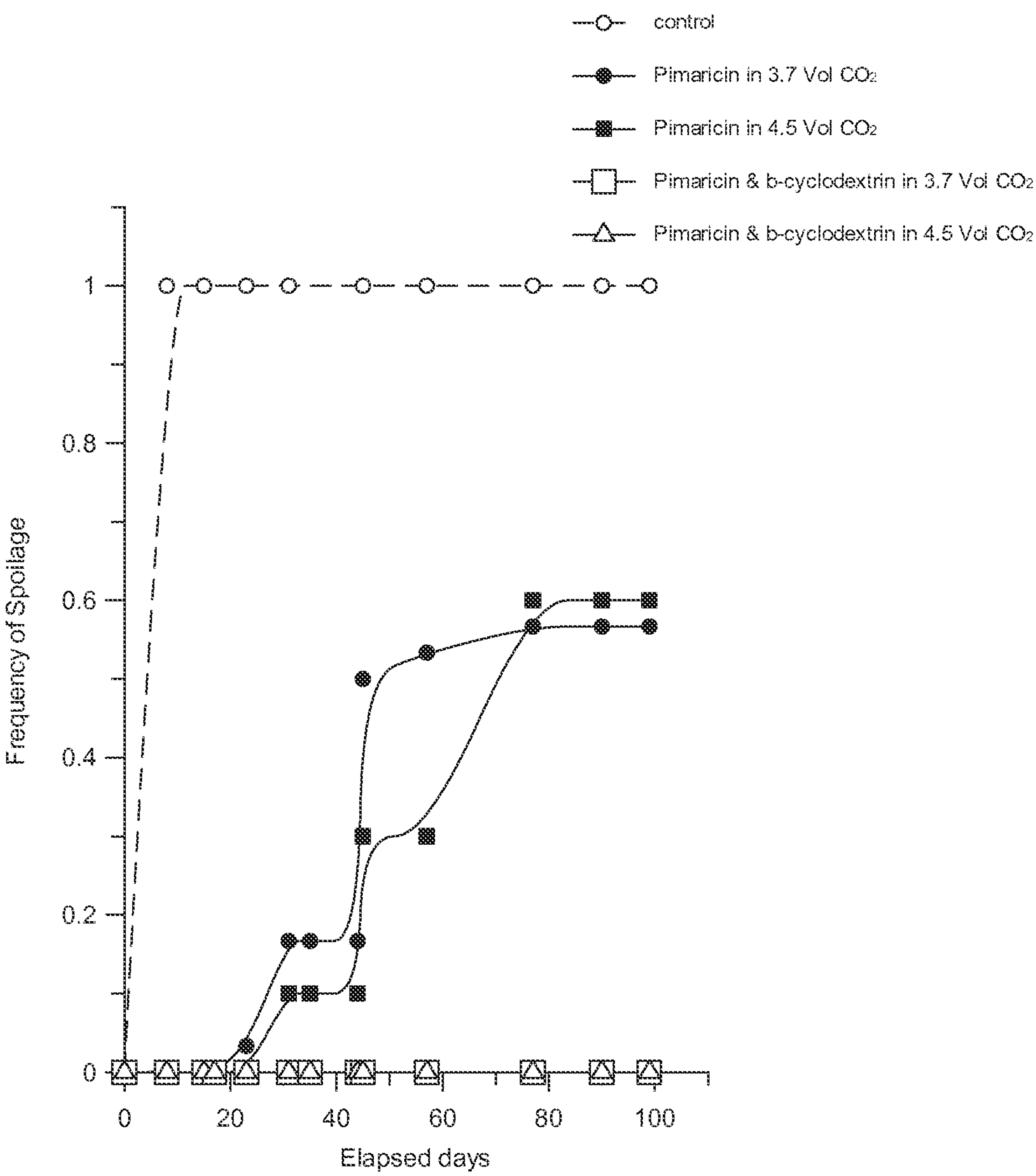
control
Pimaricin in 3.7 Vol CO2
Pimaricin in 4.5 Vol CO2
Pimaricin & b-cyclodextrin in 3.7 Vol CO2
Pimaricin & b-cyclodextrin in 4.5 Vol CO2
Frequency of Spoilage
1
0.8
0.6
0.4
0.2
0
0
20
40
60
80
100
Elapsed days

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100323065 A
- US 6268003 B
- US 4786510 A
- US 4786518 A, Nakel
- US 4722847 A, Heckert